Europäisches Patentamt

European Patent Office

Office européen des brevets

(19)

(11) EP 0 652 419 B1

(12) **EUROPÄISCHE PATENTSCHRIFT**

(45) Veröffentlichungstag und Bekanntmachung des Hinweises auf die Patenterteilung:
**20.03.1996 Patentblatt 1996/12**

(51) Int Cl.$^6$: **G01D 3/02**, G01D 5/244

(21) Anmeldenummer: **93118200.0**

(22) Anmeldetag: **09.11.1993**

(54) **Verfahren zur Korrektur des Phasenfehlers bei der Auswertung von Inkrementalgebern mit sinusförmigen Ausgangssignalen**

Method for the correction of phase errors present in the sinusoidal output signals of incremental displacement sensors

Procédé de correction d'erreurs de phase des signaux sinusoidaux d'un capteur incrémentiel

(84) Benannte Vertragsstaaten:
**AT DE FR GB IT**

(43) Veröffentlichungstag der Anmeldung:
**10.05.1995 Patentblatt 1995/19**

(73) Patentinhaber: **SIEMENS AKTIENGESELLSCHAFT D-80333 München (DE)**

(72) Erfinder:
- **Donat, Albrecht, Dipl.-Ing. D-91462 Dachsbach (DE)**
- **Schweigert, Ralf, Dipl.-Ing. D-91325 Adelsdorf (DE)**

(56) Entgegenhaltungen:
EP-A- 0 048 851          EP-A- 0 085 148
GB-A- 2 047 412          US-A- 5 202 842

**Beschreibung**

Die Erfindung bezieht sich auf ein Verfahren und eine Einrichtung zum Bestimmen der Lage eines Objekts mit Hilfe eines Gebersystems, das aus zwei sinusförmigen, um einen Winkel von etwa 90° el zueinander versetzten Gebersignalen ein Lagewinkelsignal generiert, wobei ein Korrekturwinkelsignal bestimmt wird, das zum Lagewinkelsignal additiv hinzugefügt wird und wobei das solchermaßen erzeugte Signal als korrigiertes Lagewinkelsignal weiteren Verarbeitungseinrichtungen zugeführt wird.

Zur Erfassung von Rotationsbewegungen von Werkzeugmaschinen oder von Maschinenteilen werden optische sowie magnetische Sinus-Cosinusgeber benutzt, deren Signale interpoliert werden, damit man die Lageerfassung des Werkzeugs bzw. der Maschine erfaßt. Es sind schon verschiedene Vorrichtungen zur Interpolation der Lage solcher Sinus-Cosinus-Geber bekannt. Sie beziehen sich auf zwei verschiedene Verfahren. Beim meistbenutzten handelt es sich um die Bildung der Arcustangens-Funktion der Signalspuren. Ein weiteres Verfahren, das sogenannte "HMS"-Verfahren, ist in der EP-0 390 936 beschrieben. Bei diesem wird ein vom Weg bzw. Winkel linear abhängiges digitalisierbares Folgesignal gebildet.

Alle Verfahren setzen jedoch voraus, daß die Signale, welche die Lageinformation enthalten (Sinus- und Cosinusspur), eine Phasenverschiebung von exakt 90° aufweisen. Aufgrund der Toleranzen bei der Geberherstellung und Geberjustage weisen die informationstragenden Spuren jedoch eine Phasenverschiebung auf, die von der idealen Phasenlage von 90° etwas abweicht. Bei den obengenannten Verfahren ist eine gewisse Empfindlichkeit gegenüber Fehlern dieser Art gegeben, denn aufgrund des Phasenfehlers der beiden Signale entsteht durch die Interpolation ein Lagefehler, der im Lageregelkreis eine Fehllage vortäuscht bzw. dem Drehzahlregler eine Lagewelligkeit und damit auch eine Drehzahlwelligkeit vorgibt.

Da in modernen Steuerungen und Antrieben die Lage- und Drehzahlregelung digital ausgeführt ist, wäre es bei Kenntnis des Phasenfehlers möglich, die Lageinformation für den Lage- und Drehzahlregler zu korrigieren. Die immer genauer werdende Lageerfassung bei Werkzeugmaschinen macht diese Korrektur notwendig.

Ein Verfahren der eingangs genannten Art ist aus der US-A5 202 842, ein ähnliches aus der EP-A-0 048 851 bekannt. Hierbei handelt es sich um Verfahren, bei denen die Gebersignale auf Phasenfehler untersucht werden und mittels Korrekturwerten, die in einem Speicher gespeichert sind, eine Korrektur stattfindet, wobei jedoch die Korrekturwerte in einer Kalibrierphase mit einem Referenzmeßsystem erhalten werden. Ferner ist aus der EP-A-0 085 148 ein Verfahren Stand der Technik, bei dem die Gebersignale auf Phasenfehler untersucht werden und zur Gewinnung korrigierter Gebersignale eine Korrektur einzelner Gebersignale stattfindet.

Aufgabe der Erfindung ist es, ein Verfahren der eingangs genannten Art zur technisch einfachen Korrektur des Phasenfehlers bei der Auswertung von Inkrementalgebern mit sinusförmigen Ausgangssignalen zu schaffen.

Gemäß der Erfindung wird diese Aufgabe bei einem Verfahren der eingangs genannten Art durch die Maßnahmen des kennzeichnenden Teils des Anspruches 1 gelöst.

Es wird ferner bei einer vorteilhaften Ausbildung der Erfindung ein Verfahren beschrieben, bei dem über einen Tabellenzugriff des Prozessors, der die Lage- bzw. Drehzahlregelung ausführt, der Lagefehler korrigiert werden kann. Dabei kann die Korrektur dadurch erreicht werden, daß dem aus der Interpolationselektronik kommende, noch fehlerbehafteten Winkel durch Zugriff auf eine entsprechende Tabelle ein winkelabhängiger Anteil der Fehlerfunktion zugeschlagen wird, wobei die Tabellenwerte mit dem Phasenfehlerwinkel, d.h. einer geberspezifischen Größe, multipliziert werden.

Bei diesem Verfahren ist der Phasenfehlerwinkel eine geberspezifische Größe, die - wenn sie einmal ermittelt ist - als Parameter hinterlegt sein kann. Es wäre jedoch durchaus denkbar, diesen geberspezifischen Parameter in einem Auslaufversuch zu ermitteln und von Zeit zu Zeit zu aktualisieren. Dieser Prozeß könnte sogar automatisiert werden, was dazu führen würde, daß sogar Temperatureinflüsse auf diesen Fehler kompensiert werden könnten.

Aufgabe der Erfindung ist weiters eine Einrichtung zu shaffen zur Durchführung des Verfahrens der eingangs genannten Art.

Bei einer ersten Einrichtung zur Durchführung des oben genannten Verfahrens ist gemäß Anspruch 6 als Umsetzer ein Rechenwerk vorgesehen.

Bei einer zweiten Einrichtung zur Durchführung des oben genannten Verfahren ist gemäß Anspruch 7 als Umsetzer ein Speicher für eine Tabelle vorgesehen, in welcher für vorgegebene Lagefehlerwinkel zugehörige Korrekturwerte vorgegeben sind.

Ein Ausführungsbeispiel der Erfindung ist in der Zeichnung dargestellt und wird im folgenden näher erläutert. Dabei zeigen:

FIG 1    eine Darstellung von idealen und phasenverschobenen Zeigern,
FIG 2    die numerisch berechneten Verläufe der Fehlerfunktion für zwei verschiedene Phasenfehlerwinkel,
FIG 3    Spektralanteile für verschiedene phasenfehler und
FIG 4    ein Blockschaltbild zur Phasenkorrektur.

Es werden zuerst die mathematischen Zusammenhänge zwischen Phasenfehler und Lagefehler gezeigt.

Der Lagefehler aufgrund Phasenverschiebung läßt sich in der komplexen Zahlenebene relativ einfach ermitteln, wenn man die Cosinusspur dem Realteil und die Sinusspur dem Imaginärteil zuordnet.

Ein idealer Geber soll eine Position anzeigen, die dem Weg bzw. Winkel genau entspricht. In diesem Fall werden die Signalspuren Sinus und Cosinus einen Winkel $\varphi$ codieren, der durch den Zeiger $\underline{Z}$ beschrieben ist.

$$\underline{Z} = \cos \varphi + j \sin \varphi \tag{1}$$

Ein Geber mit einer Phasenverschiebungsabweichung mit dem Wert $\alpha$ führt auf einen resultierenden Zeiger folgender Größe:

$$\underline{Z}_1 = \cos (\varphi + \alpha) + j \sin \varphi \tag{2}$$

Es sei hier darauf hingewiesen, daß bei diesem Beispiel die Phasenverschiebung komplett der Cosinusspur zugeschlagen wird.

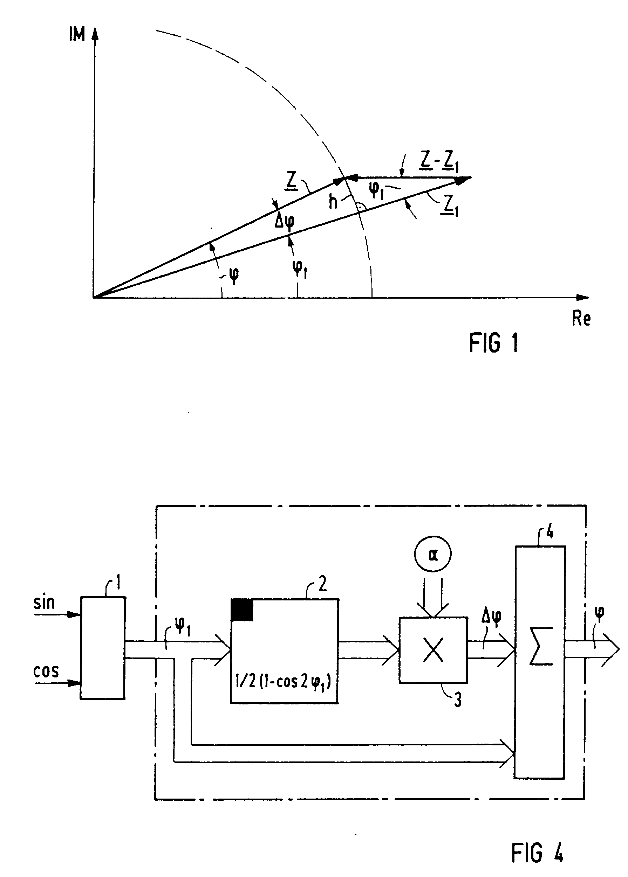

Diese Darstellung der beiden Zeiger $\underline{Z}$ und $\underline{Z}_1$ in der komplexen Zahlenebene zeigt die Darstellung gemäß FIG 1. Der Zeiger $\underline{Z}_1$ codiert über den Arcustangens bzw. andere Auswerteverfahren den Winkel $\varphi_1$. Der Differenzzeiger $\underline{Z}$ - $\underline{Z}_1$ ergibt sich zu

$$\underline{Z} - \underline{Z}_1 = \cos \varphi - \cos (\varphi + \alpha) \text{ (rein reel)} \tag{3}$$

mit der Länge

$$1 = |\underline{Z} - \underline{Z}_1| = \cos\varphi - \cos(\varphi + \alpha) \tag{4}$$

Über den Winkel $\varphi_1$, der sich sowohl als Phasenwinkel des Zeigers $\underline{Z}_1$ als auch als Differenzwinkel des Zeigers $\underline{Z}$ - $\underline{Z}_1$ und des Zeigers $\underline{Z}_1$ wiederfindet, kann die Dreieckshöhe h berechnet werden. Es gilt

$$h = 1 \sin \varphi_1 \tag{5}$$

Da die Länge des Zeigers $\underline{Z}$ den Wert $\underline{1}$ hat, läßt sich aus der Dreieckshöhe h eine Beziehung für den Korrekturwinkel $\Delta\varphi$ erstellen

$$h = \sin \Delta\varphi \tag{6}$$

Aus den Gleichungen (5) und (6) läßt sich die Beziehung ableiten

$$\sin \Delta\varphi = 1 \sin \varphi_1 \tag{7}$$

Mit der Beziehung $\varphi = \varphi_1 + \Delta\varphi$ und den Gleichungen (4) und (7) folgt:

$$\sin \Delta\varphi = \sin \varphi_1 [\cos(\varphi_1 + \Delta\varphi) - \cos (\varphi_1 + \Delta\varphi + \alpha)]$$

$$= \sin \varphi_1 [\cos\varphi_1 . \cos\Delta\varphi - \sin\varphi_1 . \sin\Delta\varphi - \cos(\varphi_1 + \alpha) . \cos\Delta\varphi$$

$$+ \sin(\varphi_1 + \alpha) \sin \Delta\varphi] \tag{8}$$

oder umgestellt

$$\sin\Delta\varphi . [1 + \sin^2\varphi_1 - \sin\varphi_1 . \sin(\varphi_1 + \alpha)] = \cos\Delta_\varphi .$$

$$[\sin\varphi_1 \cos\varphi_1 - \sin\varphi_1 \cos(\varphi_1 + \alpha)]$$

$$\tan\Delta\varphi = \frac{\sin\varphi_1 \cos\varphi_1 - \sin\varphi_1 \cos(\varphi_1 + \alpha)}{1 + \sin^2\varphi_1 - \sin\varphi_1 . \sin(\varphi_1 + \alpha)} \tag{9}$$

Der Ausdruck im Nenner $\sin^2\varphi_1 - \sin\varphi_1(\sin\varphi_1 + \alpha)$ ist für kleine Werte von $\alpha$ gegenüber dem Wert 1 zu vernachlässigen.

Somit bleibt:

$$\tan \Delta\varphi = \sin\varphi_1 \cos\varphi_1 - \sin\varphi_1 \cos(\varphi_1 + \alpha)$$

$$= \sin\varphi_1 \cos\varphi_1 - \sin\varphi_1 \cos\varphi_1 \cos\alpha + \sin^2\varphi_1 . \sin\alpha \tag{10}$$

In dieser Darstellung kann für kleine Werte von $\alpha$ die Differenz $\sin\varphi_1 \cos \varphi_1 - \sin\varphi_1 \cos\varphi_1 \cos\alpha$ gegenüber dem Ausdruck $\sin^2\varphi_1 \sin\alpha$ vernachlässigt werden. Damit bleibt:

$$\tan \Delta\varphi = \sin^2\varphi_1 \sin\alpha$$

$$= \frac{1}{2} \sin\alpha (1 - \cos 2\varphi_1) \qquad (11)$$

Da die Werte für den Phasenfehler $\alpha$ und somit auch für den Lagefehler $\Delta\varphi$ klein sind, gilt in der 1. Näherung mit

$$\tan \Delta\varphi \approx \Delta\varphi \text{ und}$$

$$\sin\alpha \approx \alpha$$

$$\Delta\varphi \approx \alpha \cdot \frac{1}{2} (1 - \cos 2\varphi_1) \qquad (12)$$

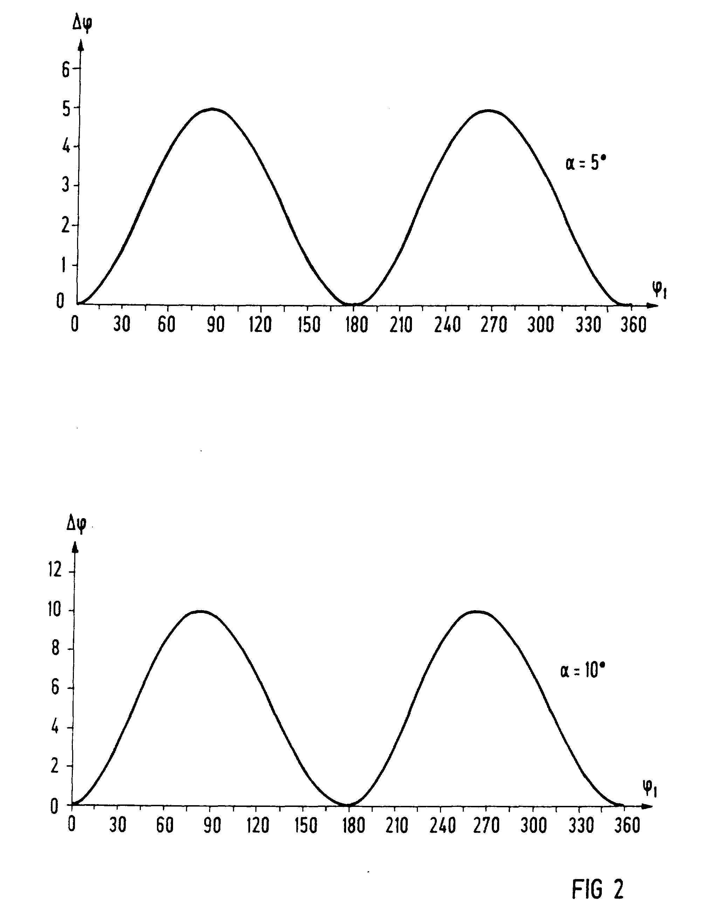

Die Darstellung gemäß FIG 2 zeigt beispielhaft den numerisch berechneten Verlauf der Fehlerfunktion

$$\Delta\varphi = \arctan \frac{\sin\varphi_1}{\cos(\varphi_1 + \alpha)} - \varphi_1 \qquad (13)$$

für die beiden Winkel 5° und 10°.

An den Verläufen der Fehlerfunktion läßt sich erkennen, daß die berechnete Näherung (12) Gültigkeit hat.

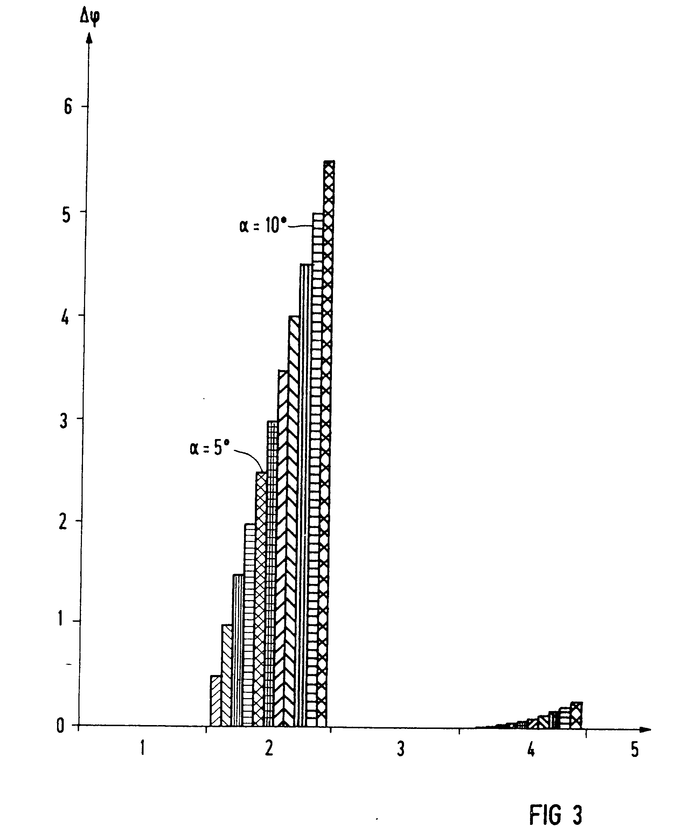

Eine weitere Bestätigung für die Gültigkeit der Näherung zeigt die Darstellung gemäß FIG 3, bei welcher die Spektralanteile für verschiedene Phasenfehler $\alpha$ graphisch dargestellt sind. Diese Darstellung zeigt, daß die Spektrallinien der zweiten Oberwelle dominant sind ($\cos 2\varphi_1$), und daß eine Korrektur der zweiten Oberwelle im Lagewinkel den Lagefehler um den Faktor 20 minimiert.

In der Darstellung gemäß FIG 4 wird gezeigt, wie die schaltungsgemäße Korrektur mit Hilfe eines Phasenkorrekturgliedes (gestrichelt angedeutet) in der Steuerung oder im Antrieb erfolgen kann. Aus der Interpolationselektronik 1 wird zunächst ein Wert $\varphi_1$ für den Winkel berechnet. Da die informationstragenden Spuren (Sinus und Cosinus) eine Phasenverschiebung abweichend von der idealen Phasenlage von 90° aufweisen, ist dieser Wert fehlerbehaftet und wird deshalb einem tabellarischen Speicher S zugeführt, in dem der $\varphi_1$-abhängige Anteil der Fehlerfunktion abgelegt ist; und zwar nach der Beziehung:

$$f_{Tab}(\varphi_1) = \frac{1}{2} (1 - \cos 2\varphi_1)$$

Diese stellt den zweiten Faktor der Gleichung (12) dar.

Der Ausgangswert der Tabelle wird weiter einem Multiplizierer 3 zugeführt und mit dem Phasenfehlerwinkel multipliziert. Der Phasenfehlerwinkel $\alpha$ ist eine geberspezifische Größe, die als Parameter hinterlegt sein kann. Nach der Multiplikation der Fehlerfunktion $\frac{1}{2} (1 - \cos 2\varphi_1)$ mit dem Phasenfehlerwinkel $\alpha$ erhält man den Korrekturwinkel $\Delta\varphi$, wie er der Gleichung (12) zugrunde liegt, der im Summierer 4 zu dem interpolierten Winkel $\varphi_1$ addiert wird. Der Ausgang dieses Summierers 4 liefert den gewünschten korrigierten Winkel $\varphi$ an der Übersichtlichkeit halber nicht gezeigte weitere Auswerteeinrichtungen.

Der Phasenfehlerwinkel $\alpha$ kann als geberzugehörige Größe einmalig ermittelt werden und als geberspezifischer Parameter festgehalten werden. Es ist aber auch denkbar, die Ermittlung des Geberphasenfehlers in einem Auslaufversuch zu automatisieren. Der automatisch ermittelte Geberphasenfehler kann dann in einer niederprioren Zeitscheibe aktualisiert werden. Durch eine automatische Aktualisierung des Phasenfehlers können sogar Temperatureinflüsse auf diesen Fehler kompensiert werden.

**Patentansprüche**

1. Verfahreii zum Bestimmen der Lage eines Objekts mit Hilfe eines Gebersystems, das aus zwei sinusförmigen, um einen Winkel von etwa 90°el zueinander versetzten Gebersignalen ein Lagewinkelsignal ($\varphi_1$) generiert, wobei ein Korrekturwinkelsignal ($\Delta\varphi$) bestimmt wird, das zum Lagewinkelsignal ($\varphi_1$) additiv hinzugefügt wird und wobei das solchermaßen erzeugte Signal als korrigiertes Lagewinkelsignal ($\varphi$) weiteren Verarbeitungseinrichtungen zugeführt wird, **dadurch gekennzeichnet**, daß bei Kenntnis eines Phasenfehlerwinkels ($\alpha$) in einem Umsetzer (2,3) das Korrekturwinkelsignal ($\Delta\varphi$) nach der Beziehung

$$\Delta\varphi = \arctan \frac{\sin\varphi_1}{\cos(\varphi_1 + \alpha)} - \varphi_1$$

mit

$\varphi_1$ = Lagewinkelsignal
und
$\alpha$ = Phasenfehlerwinkel

bestimmt wird.

2. Verfahren nach Anspruch 1, **dadurch gekennzeichnet**, daß die Beziehung vereinfacht ist als

$$\Delta\varphi = \frac{1}{2}\,(1 - \cos2\varphi_1).\,\alpha$$

3. Verfahren nach Anspruch 1 oder 2, **dadurch gekennzeichnet**, daß der Phasenfehlerwinkel ($\alpha$) als geberzugehörige Größe einmalig ermittelt wird und dann als geberspezifischer Parameter festgehalten wird.

4. Verfahren nach Anspruch 1 oder 2, **dadurch gekennzeichnet**, daß der Phasenfehlerwinkel ($\alpha$) auf Wunsch aktualisierbar ist.

5. Verfahren nach Anspruch 4, **dadurch gekennzeichnet**, daß der Phasenfehlerwinkel ($\alpha$) jeweils in einem Auslaufversuch ermittelt wird.

6. Einrichtung zur Durchführung des Verfahrens nach Anspruch 1, 2, 3, 4 oder 5, mit einem Gebersystem (1), einem Umsetzer (2,3) und einer Addierstufe (4), wobei das Gebersystem (1) aus zwei sinusförmigen, um einen Winkel von etwa 90° el zueinander versetzten Gebersignalen, ein Lagewinkelsignal ($\varphi_1$) generiert, der Umsetzer (2,3) ein Korrekturwinkelsignal ($\Delta\varphi$) generiert, und das Lagewinkelsignal ($\varphi_1$) und das Korrekturwinkelsignal ($\Delta\varphi$) in der Addierstufe (4) summiert werden, um ein korrigiertes Lagewinkelsignal ($\varphi$) zu generieren, mit weiteren Verarbeitungseinrichtungen denen das solchermaßen erzeugte korrigiertes Lagewinkelsignal zugeführt wird, wobei als Umsetzer (2,3) ein Rechenwerk vorgesehen ist.

7. Einrichtung zur Durchführung des Verfahrens nach Anspruch 1, 2, 3, 4 oder 5, mit einen Gebersystem (1), einem Umsetzer (2, 3) und einer Addierstufe (4), wobei das Gebersystem (1) aus zwei sinusförmigen, um einen Winkel von etwa 90° el zueinander versetzten Gebersignalen, ein Lagewinkelsignal ($\varphi_1$) generiert, der Umsetzer (2,3) ein Korrekturwinkelsignal ($\Delta\varphi$) generiert, und das Lagewinkelsignal ($\varphi_1$) und das Korrekturwinkelsignal ($\Delta\varphi$) in der Addierstufe (4) summiert werden, um ein korrigiertes Lagewinkelsignal ($\varphi$) zu generieren, mit weiteren Verarbeitungseinrichtungen, denen das solchermaßen erzeugte korrigierte Lagewinkelsignal zugeführt wird, wobei als Umsetzer ein Speicher (2) für eine Tabelle vorgesehen ist, in welcher für vorgegebene Lagefehlerwinkel ($\varphi_1$) zugehörige Korrekturwerte vorgegeben sind, die nach Wichtung mit dem Phasenfehler ($\alpha$) das Korrekturwinkelsignal ($\Delta\varphi$) angeben.

## Claims

1. Method for determining the position of an object with the aid of a sensor system, which generates a positional angle signal ($\varphi_1$) from two sinusoidal sensor signals which are electrically offset relative to each other by an angle of approximately 90°, wherein a correction angle signal ($\Delta_\varphi$) is determined, which signal is added additively to the positional angle signal ($\varphi_1$), and wherein the signal produced in such a way is fed, as a corrected positional angle signal ($\varphi$), to further processing devices, characterised in that given knowledge of a phase error angle ($\alpha$) the correction angle signal ($\Delta\varphi$) is determined in a converter (2, 3) according to the relationship

$$\Delta\varphi = \arctan\frac{\sin\varphi_1}{\cos(\varphi_1 + \alpha)}\, - \varphi_1$$

with

$\varphi_1$ = positional angle signal

and

$\alpha$ = phase error angle

2. Method according to claim 1, characterised in that the relationship is simplified as

$$\Delta\varphi = \frac{1}{2}(1 - \cos2\varphi_1).\,\alpha$$

3. Method according to claim 1 or 2, characterised in that the phase error angle ($\alpha$) is ascertained once as a sensor-associated quantity and is then retained as a sensor-specific parameter.

4. Method according to claim 1 or 2, characterised in that the phase error angle ($\alpha$) can be updated as desired.

5

5. Method according to claim 4, characterised in that the phase error angle ($\alpha$) is ascertained in each case in a retardation test.

6. Device for carrying out the method according to claim 1, 2, 3, 4 or 5, having a sensor system (1), a converter (2, 3) and an adding stage (4), wherein the sensor system (1) generates a positional angle signal ($\varphi_1$) from two sinusoidal sensor signals which are electrically offset relative to each other by an angle of approximately 90°, the converter (2, 3) generates a correction angle signal ($\Delta\varphi$), and the positional angle signal ($\varphi_1$) and the correction angle signal ($\Delta\varphi$) are added in the adding stage (4) in order to generate a corrected positional angle signal ($\varphi$), having further processing devices to which the corrected positional angle signal, which is produced in such a way, is fed, wherein an arithmetic unit is provided as the converter (2, 3).

7. Device for carrying out the method according to claim 1, 2, 3, 4 or 5, having a sensor system (1), a converter (2, 3) and an adding stage (4), wherein the sensor system (1) generates a positional angle signal ($\varphi_1$) from two sinusoidal sensor signals which are electrically offset relative to each other by an angle of approximately 90°, the converter (2, 3) generates a correction angle signal ($\Delta\varphi$), and the positional angle signal ($\varphi_1$) and the correction angle signal ($\Delta_\varphi$) are added in the adding stage (4) in order to generate a corrected positional angle signal ($\varphi$), having further processing devices to which the corrected positional angle signal, which is produced in such a way, is fed, wherein a memory (2) for a table is provided as the converter, in which table there are given for given positional error angles ($\varphi_1$) associated correction values which after being weighted with the phase error ($\alpha$) indicate the correction angle signal ($\Delta\varphi$).

## Revendications

1. Procédé pour déterminer la position d'un objet à l'aide d'un système de capteur, qui produit un signal ($\varphi_1$) d'angle de position à partir de deux signaux sinusoïdaux de capteur, décalés l'un par rapport à l'autre d'un angle d'environ 90° électriques, dans lequel on détermine un signal ($\Delta\varphi$) d'angle de correction, qui est ajouté par addition au signal ($\varphi_1$) d'angle de position, et dans lequel le signal produit de cette manière est envoyé, en tant que signal ($\varphi$) d'angle de position corrigé, à d'autres dispositifs de traitement, caractérisé par le fait que, par la connaissance d'un angle ($\alpha$) d'erreur de phase, le signal ($\Delta\varphi$) d'angle de correction correspondant à la relation

$$\Delta\varphi = \arctan \frac{\sin\varphi_1}{\cos(\varphi_1 + \alpha)} - \varphi_1$$

avec

$\varphi_1 =$ signal d'angle de position
et
$\alpha =$ angle d'erreur de phase
est déterminé dans un convertisseur (2,3).

2. Procédé suivant la revendication 1, caractérisé par le fait que la relation est simplifiée sous la forme

$$\Delta\varphi = \frac{1}{2}(1 - \cos 2\varphi_1).\alpha.$$

3. Procédé suivant la revendication 1 ou 2, caractérisé par le fait que l'angle ($\alpha$) d'erreur de phase est déterminé une fois en tant que grandeur associée à un capteur et est ensuite fixé en tant que paramètre spécifique au capteur.

4. Procédé suivant la revendication 1 ou 2, caractérisé par le fait que l'angle ($\alpha$) d'erreur de phase peut être actualisé à volonté.

5. Procédé suivant la revendication 4, caractérisé par le fait que l'angle ($\alpha$) d'erreur de phase est déterminé lors d'un essai de ralentissement.

6. Dispositif pour la mise en oeuvre du procédé suivant la revendication 1, 2, 3, 4 ou 5, comportant un système capteur (1), un convertisseur (2,3) et un étage (4) additionneur, dans lequel le système capteur (1) produit, à partir de deux signaux sinusoïdaux de capteurs, décalés l'un par rapport à l'autre d'un angle d'environ 90° électriques, un signal ($\varphi_1$) d'angle de position, le convertisseur (2,3) produit un signal ($\Delta\varphi$) d'angle de correction et le signal ($\varphi_1$) d'angle de position et le signal ($\Delta\varphi$) d'angle de correction sont additionnés dans l'étage (4) additionneur pour produire un

signal ($\varphi$) d'angle de position corrigé, et comportant d'autres dispositifs de traitement, auxquels est envoyé le signal d'angle de position corrigé obtenu de cette manière, dans lequel une unité de calcul est prévue en tant que convertisseur (2,3).

7. Dispositif pour la mise en oeuvre du procédé suivant la revendication 1, 2, 3, 4 ou 5, comportant un système capteur (1), un convertisseur (2,3) et un étage (4) additionneur, dans lequel le système capteur (1) produit, à partir de deux signaux sinusoïdaux de capteurs, décalés l'un par rapport à l'autre d'un angle d'environ 90° électriques, un signal ($\varphi_1$) d'angle de position, le convertisseur (2,3) produit un signal ($\Delta\varphi$) d'angle de correction et le signal ($\varphi_1$) d'angle de position et le signal ($\Delta\varphi$) d'angle de correction sont additionnés dans l'étage (4) additionneur pour produire un signal ($\varphi$) d'angle de position corrigé, et comportant d'autres dispositifs de traitement, auxquels est envoyé le signal d'angle de position corrigé obtenu de cette manière, dans lequel il est prévu en tant que convertisseur une mémoire (2) pour un tableau, dans lequel sont prédéterminées, pour des angles ($\varphi_1$) d'erreurs de position prédéterminés, des valeurs de correction associées, qui indiquent le signal ($\Delta\varphi$) d'angle de correction après pondération avec l'erreur ($\alpha$) de phase.

FIG 1

FIG 4

FIG 2

FIG 3